# EUROPEAN PATENT APPLICATION

(11) **EP 3 035 588 A1**
(43) Date of publication of application: **22.06.2016**
(21) Application number: 14307082.9
(22) Date of filing: 18.12.2014
(51) Int. Cl.: H04L 9/32

(54) **System for verifying a one-time password**

(71) Applicant: GEMALTO SA, 92190 Meudon (FR)
(72) Inventor: Tan, Seng Kee, 92190 Meudon (FR); Ho, Khoon Huat, 92190 Meudon (FR); Koh, Jun-Li Christabel, 92190 Meudon (SG)
(74) Representative: Cassagne, Philippe M.J.

(57) **Abstract**

The present invention relates to a system (SYS) for verifying for verifying a one-time password (OTP1) between an electronic device (D) and a remote server (SERV), **wherein** said system (SYS) comprises:
- said electronic device (D) which is adapted to:
- generate a one-time password (OTP1) comprising a first part (p1) and a second part (p2), said first part (p1) and second part (p2) comprising at least one digit (dg) at a given position (ps) in said one-time password (OTP1);
- transmit said first part (p1) of said one-time password (OTP1) to said remote server (SERV);
- receive at least said second part (p2) of the one-time password (OTP1) from said remote server (SERV);
- display at least said second part (p2) of said one-time password (OTP1) on a screen (Sc);

- said remote server (SERV) which is adapted to:
- receive from said electronic device (D) said first part (p1) of said one-time password (OTP1);
- verify said first part (p1) of said one-time password (OTP1);
- if said first part (p1) is validated, transmit to said electronic device (D) at least said second part (p2) of the one-time password (OTP1).

## Description

### FIELD OF THE INVENTION

The present invention relates to a system for verifying a one-time password between an electronic device and a remote server.

It also relates to a corresponding method.

Such a system may be used in any application where a one-time password is needed.

### BACKGROUND OF THE INVENTION

A well-known system for verifying a one-time password between an electronic device and a remote server is used in internet banking context in a non-limitative example.
A one-time password is one of the prevailing ways of proof of the identity of a user in addition to his password. The one-time password (referred as OTP) is generated from the electronic device with simply a button press. The generation of a one-time password without any data input by the user is named simple-OTP.
Then the user sends the one-time password via the banking application to the remote server which verifies it.
One problem of this well-known prior art is that, only the user identification is verified. The remote server is not authenticated and the user is not able to know if the remote server is genuine or not.
In order to authenticate the remote server, one existing mechanism is for the user to verify the remote server signed public certificate through the website used. Said verification is based on a public key infrastructure (referred as PKI).
One problem of this prior art it that additional steps for the electronic device provisioning are required for importing a trusted public certificate into said electronic device. Moreover, additional logics and circuitry on said electronic device are required for complex and expensive computation used for a PKI infrastructure.

It is an object of the invention to provide a system for verifying a one-time password between an electronic device and a remote server, which authenticates said remote server in an easier way.

### SUMMARY OF THE INVENTION

To this end, there is provided a system for verifying a one-time password between an electronic device and a remote server wherein said system comprises:
- said electronic device which is adapted to:
   - generate a one-time password comprising a first part and a second part, said first part and second part comprising at least one digit at a given position in said one-time password;
   - transmit said first part of said one-time password to said remote server;
   - receive at least said second part of the one-time password from said remote server;
   - display at least said second part of said one-time password on a screen;
- said remote server which is adapted to:
   - receive from said electronic device said first part of said one-time password;
   - verify said first part of said one-time password;
   - if said first part is validated, transmit to said electronic device at least said second part of the one-time password.

Hence, an easier system is used as during the one-time password verification, the authentication of the remote server is performed by the user of the electronic device with the second part of the one-time password sent by the remote server. With the second part sent, the remote server indicates that it knows the exact value of the one-time password displayed by the electronic device as it shows that it is able to complete the missing part (which corresponds to the second part) which is not sent by the electronic device.

In addition, there is provided an electronic device adapted to communicate with a remote server, wherein said electronic device is adapted to:
- generate a one-time password comprising said first part and a second part, said first part and second part comprising at least one digit at a given position in said one-time password;
- transmit said first part of said one-time password to said remote server;
- receive at least said second part of the one-time password from said remote server;
- display at least said second part of said one-time password on a screen.

In addition, there is provided a remote server adapted to communicate with an electronic device, wherein said remote server is adapted to:
- receive from said electronic device a first part of a one-time password comprising said first part and a second part, said first part and second part comprising at least one digit at a given position in said one-time password;
- verify said first part of said one-time password;
- if said first part is validated, transmit to said electronic device at least said second part of the one-time password.

According to non-limitative embodiments of the invention, the system, or the electronic device, or the remote server, in accordance with the invention further comprises the following characteristics.

In a non-limitative embodiment,
- said remote server is further adapted to:
   - transmit to said electronic device said first part of said one-time password if said first part is validated;
- said electronic device is further adapted to:
   - receive said first part of the one-time password from said remote server;
   - display said first part of said one-time password on said screen.

In a non-limitative embodiment,
- said remote server is further adapted to:
   - select the given position of the at least one digit of said first part and of said second part;
   - to send a request to said electronic device for a first part of said one-time password comprising the at least one digit at the selected given position;
- said electronic device is further adapted to receive said request from said remote server.

In a non-limitative embodiment, said remote server is further adapted to select the given positions of a plurality of digits of said first part and of said second part.

In a first non-limitative variant of embodiment, the selection of the at least one position of one digit of said first part and of said second part is predetermined.

In a second non-limitative variant of embodiment, the selection of the at least one position of one digit of said first part and of said second part is random.

In a non-limitative embodiment, said random selection is performed at a same interval as a pitch of an event-based one-time password.

In a non-limitative embodiment, the request corresponds to an input text box displayed to enter the one-time password with masked positions corresponding to the positions of the digits in said second part.

In a non-limitative embodiment,
- said remote server is further adapted to:
   - generate a one-time password comprising a first part and a second part, said first part and second part comprising at least one digit at a given position in said one-time password;
   - transmit said first part of said one-time password to said electronic device;
   - receive at least said second part of the one-time password from said electronic device;
   - display at least said second part of said one-time password on a screen;
- said electronic device is further adapted to:
   - receive from said remote server said first part of said one-time password;
   - verify said first part of said one-time password;
   - if said first part is validated, transmit to said remote server at least said second part of the one-time password.

In addition, there is provided a method for verifying a one-time password between an electronic device and a remote server, wherein said method comprises:
- generating by means of said electronic device a one-time password comprising a first part and a second part, said first part and second part comprising at least one digit at a given position in said one-time password;
- transmitting by means of said electronic device said first part of said one-time password to said remote server;
- receiving by means of said remote server from said electronic device said first part of said one-time password;
- verifying by means of said remote server said first part of said one-time password;
- if said first part is validated, transmitting by means of said remote server to said electronic device at least said second part of the one-time password;
- receiving by means of said electronic device at least said second part of the one-time password from said remote server;
- displaying by means of said electronic device at least said second part of said one-time password on a screen.

### BRIEF DESCRIPTION OF THE DRAWINGS

Some embodiments of methods and/or apparatus in accordance with embodiments of the present invention are now described, by way of example only, and with reference to the accompanying drawings, in which:
- Fig. 1 illustrates schematically a system for verifying a one-time password between an electronic device and a remote server, said system comprising said electronic device and said remote server, according to a non-limitative embodiment of the invention;
- Fig. 2 illustrates schematically the different functions of the electronic device and the remote server of the system of fig. 1;
- Fig. 3 illustrates a schematic organization chart of the method carried out by the system of Fig. 1 or Fig. 2 according to a non-limitative embodiment of the invention ;
- Fig. 4 is a sequence diagram which illustrates the different steps of the method of Fig. 3, with further non-limitative steps.

### DESCRIPTION OF EMBODIMENTS OF THE INVENTION

In the following description, well-known functions or constructions by the man skilled in the art are not described in detail since they would obscure the invention in unnecessary detail.

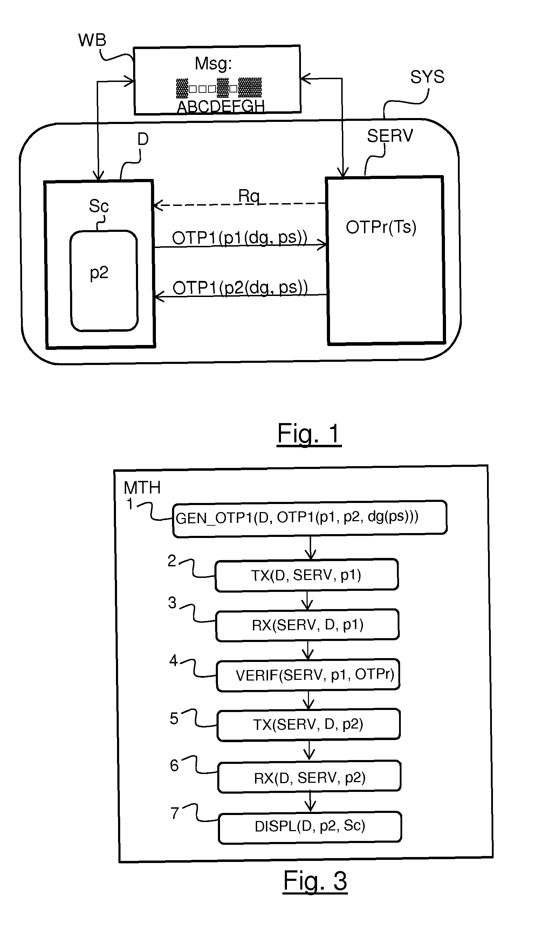

The system SYS for verifying a one-time password between an electronic device and a remote server according to the invention is illustrated in Fig. 1 and Fig. 2.
It comprises:
- an electronic device D which is adapted to generate a one-time password OTP1; and
- a remote server SERV which is adapted to verify said one-time password OTP1.

For the following, a one-time password will be also called OTP.

The system SYS is used for a banking application in a non-limitative example, and more particularly for an online purchase on a website WB. In order to initiate an online purchase on a website WB, a user of a banking card, has to enter his banking card number and the CVV ("Card Verification Value") printed on its the back.
To secure the online payment, usually, the website WB connects to the remote server SERV, which is a payment remote server, and said remote server asks for a one-time password OTP1.
The user will use the electronic device D to create a one-time password OTP1, said one-time password OTP1 being displayed on a LCD screen embedded in the electronic device D for example.
In a non-limitative embodiment, the banking card comprises said electronic device D.
The generation of the one-time password OTP1 is based on synchronization between the remote server SERV to which the website WB connects and the electronic device D according to an event-based, such as a reference clock's time or a reference counter (not illustrated) of the remote server SERV. Therefore, the OTP1 is modified according to a specific pitch Ts of said event-based.

As will be described in detail below, instead of an entire simple-OTP, the user shall enter an incomplete OTP for the remote server SERV to perform authentication. The remote server SERV will authenticate the partial-simple-OTP. If the operation is a success, the remote server SERV will return the missing parts of the OTP from the partial-simple-OTP sent in. This missing parts return will allow the user to verify if the backend is genuine.

The different elements of said system SYS are described in detail in the following.

As illustrated in Fig. 2, the electronic device D is adapted to:
- generate a one-time password OTP1 comprising a first part p1 and a second part p2, said first part p1 and second part p2 comprising at least one digit dg at a given position ps in said one-time password OTP1 (function illustrated GEN_OTP1(D, OTP1(p1, p2, dg(ps))));
- transmit said first part p1 of said one-time password OTP1 to said remote server SERV (function illustrated TX(D, SERV, p1));
- receive at least said second part p2 of the one-time password OTP1 from said remote server SERV (function illustrated RX(D, SERV, p2)) ;
- display at least said second part p2 of said one-time password OTP1 on a screen Sc (function illustrated DISPL(D, p2, Sc)).

In non-limitative embodiments, said electronic device D comprises a screen Sc (as illustrated in Fig. 1), or cooperates with another device which comprises a screen Sc.
With the display of the second part p2 of the OTP1 on the screen Sc, the user of the electronic device D who wants to perform the online purchase is able to verify if the OTP1 is also known by the remote server SERV. If the second part p2 sent by the remote server SERV is equal to the part of the OTP1 which has been generated by the electronic device D (and not sent to the remote server SERV), the user considers the remote server SERV to be a reliable remote server SERV and goes on with the online payment. Otherwise, he will stop the online payment.

As illustrated in Fig. 2, the remote server SERV is adapted to:
- receive from said electronic device D a first part p1 of a one-time password OTP1 comprising said first part p1 and a second part p2, said first part p1 and second part p2 comprising at least one digit dg at a given position ps in said one-time password OTP1 (function illustrated RX(SERV, D, p1));
- verify said first part p1 of said one-time password OTP1 (function illustrated VERIF(SERV, p1, OTP1 r));
- if said first part p1 of said one-time password OTP1 is validated, transmit to said electronic device D at least said second part p2 of the one-time password OTP1 (function illustrated TX(SERV, D, p2)).

When the remote server SERV verifies the one-time password OTP1, if the one-time password OTP1 generated by the electronic device D is too shifted in comparison with a reference OTPr of the remote server, it won't be recognized and the remote server SERV will reject the online payment.

In order for the user to know if the remote server SERV has the knowledge of the whole one-time password OTP1, that is to say of the first part p1 and of the second part p2, in a non-limitative embodiment said remote server SERV is further adapted to transmit to said electronic device D said first part p1 of said one-time password OTP1 if said first part p1 of said one-time password OTP1 is validated (function illustrated in dotted lines TX(SERV, D, p1)), and said electronic device D is further adapted to:
- receive said second part p1 of the one-time password OTP1 from said remote server SERV (function illustrated in dotted lines RX(D, SERV, p1));
- display said first part p1 of said one-time password OTP1 on said screen Sc (function illustrated in dotted lines DISPL(D, p1, Sc)).

In order for the electronic device D to know which digits dg at which position ps it has to send to the remote server SERV, and which digits dg at which position ps it won't sent to the remote server SERV, in a non-limitative embodiment, said remote server SERV is further adapted to:
- select the given position ps of the at least one digit dg of said first part p1 and of said second part p2 (function illustrated in dotted lines SEL(SERV, p1(ps,dg), p2(ps,dg)));
- send a request Rq to said electronic device D for a first part p1 of said one-time password OTP1 comprising the at least one digit dg at the selected given position ps (function illustrated in dotted lines TX(SERV, D, Rq, p1 (ps, dg));
and said electronic device D is further adapted to receive said request Rq from said remote server SERV (function illustrated in dotted lines RX(D, SERV, Rq, p1(ps, dg)).

In a non-limitative embodiment, the remote server SERV is further adapted to select the given positions ps of a plurality of digits dg of said first part p1 and of said second part p2.

In a first non-limitative embodiment, the selection of the at least one position ps of one digit dg of said first part p1 and of said second part p2 is predetermined (function illustrated in dotted lines SEL_P(SERV, p1(ps,dg), p2(ps,dg))).

In order to prevent an attacker to intercept the incomplete one-time password OTP1 and to use said intercepted first part p1 to carry out an ill-intent transaction, in a second non limitative embodiment, the selection of the at least one position ps of one digit dg of said first part p1 and of said second part p2 is random (function illustrated in dotted lines SEL_R(SERV, p1(ps,dg), p2(ps,dg))).
In a non-limitative embodiment, said random selection is performed at a same interval as the pitch Ts of the event-based one-time password OTP1. Randomness forces user's active participation right from the start of the mutual authentication process.
If positions are selected randomly, the knowledge of previous failed attempt will not help the attacker to make guess on the one-time password OTP to use.
Changing selection for each pitch prevents an attacker from getting too much information for a particular one-time password OTP within a single pitch.
For example, a phishing website may prompt for the user for a one-time password OTP twice within the same pitch, with different positions. From this, the phishing website may be able to reconstruct the huge portion of the one-time password OTP. With the ransom selection, it is not possible.

In a non-limitative example, when said pitch is a time pitch in the case of an event-based OTP which is a reference clock's time, said time pitch Ts is equal to 30 seconds.

In a third non-limitative embodiment, a combination of both first and second non-limitative embodiments is performed. It means that the same positions ps of some digits dg for said part p1 and for said part 2 will always be chosen, whereas other positions ps of some other digits will be randomly chosen.

Hence, the system SYS permits via a partial OTP (first part p1) and a return missing OTP part (second part) to perform a mutual authentication between the user of the electronic device D and the remote server SERV. With the first part p1, the user identification is performed by the remote server SERV, and with the second part p2, the remote server authentication is performed by the user. The user knows that the remote server is genuine.

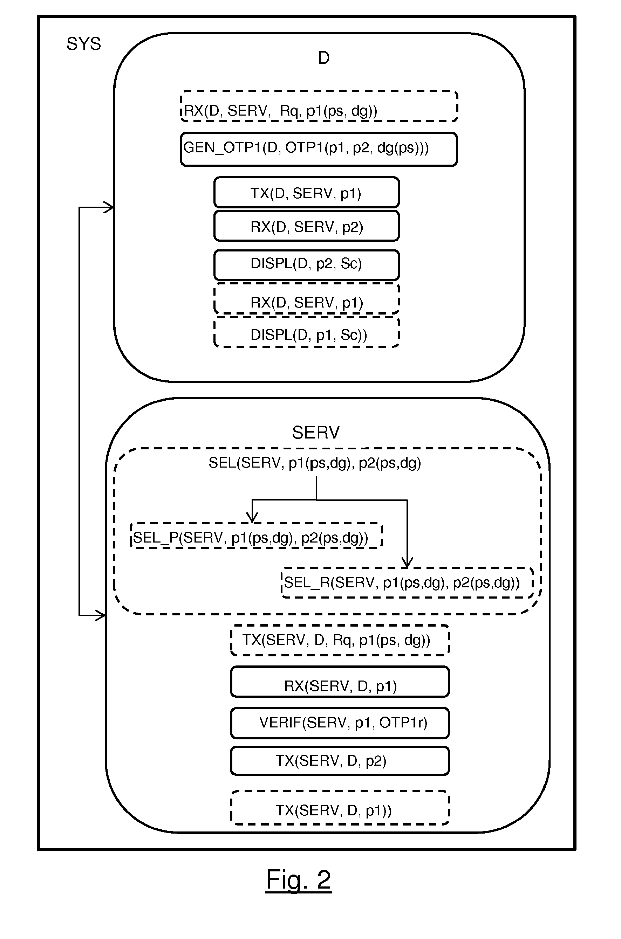

Hence, the system SYS which has been described carries out a method MTH for verifying a one-time password OTP1 between an electronic device D and a remote server SERV.
Said method MTH is illustrated in Fig. 3.

**In step 1),** said electronic device D generates a one-time password OTP1 comprising a first part p1 and a second part p2, said first part p1 and second part p2 comprising at least one digit dg at a given position ps in said one-time password OTP1.
For the following, in a non-limitative example, the electronic device D generates an OTP1 comprising eight digits at respectively the positions ABCDEFGH.

In a non-limitative example, the first part p1 comprises four digits which are respectively at the given positions ps = BCDF, and the second part p2 comprises also four digits which are respectively at the given positions ps = AEGH.
In a non-limitative example, the eight digits of the OTP1 are: "28965431".

**In step 2),** said electronic device D transmits said first part p1 of said one-time password OTP1 to said remote server SERV.
In the given example, the electronic device D transmits the digits "8964" at the respective positions BCDF.

**In step 3),** said remote server SERV receives from said electronic device D said first part p1 of said one-time password OTP1.
In the given example, said remote server SERV receives said digits "8964".

**In step 4),** said remote server SERV verifies said first part p1 of said one-time password OTP1.
In the given example, it verifies the digits "8964" with its own reference one-time password OTPr.

**In step 5),** if said first part p1 of said one-time password OTP1 is validated, said remote server SERV transmits to said electronic device D at least said second part p2 of the one-time password OTP1.
In the given example, the digits are validated. They are the same as in the reference one-time password OTPr. The remote server SERV sends back the digits "2531" at the respective positions AEGH. Said returned digits are used for the remote server SERV authentication by the user.
In a non-limitative embodiment, the remote server SERV further sends back a success status (not illustrated).
If the digits are not right, the remote server SERV returns a failed status (not illustrated).

**In step 6),** said electronic device D receives at least said second part p2 of the one-time password OTP1 from said remote server SERV.
In the given example, said electronic device D receives said digits "2531".

**In step 7),** said electronic device D displays at least said second part p2 of said one-time password OTP1 on a screen Sc.

In the given example, said electronic device D displays said digits "2531" for user verification.
The user may now check the missing part p2 of the one-time password OTP1.

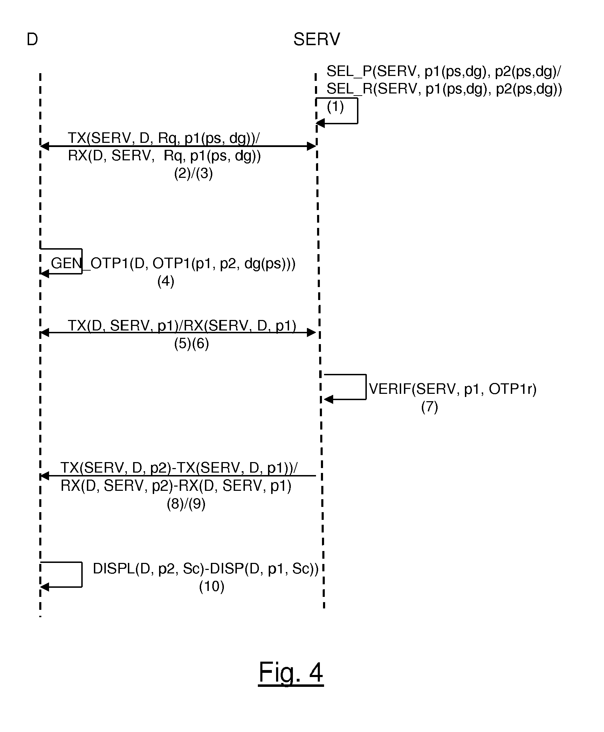

Fig. 4 illustrates a diagram sequence of the method MTH with the further non-limitative embodiments:
- the first parts p1 and p2 comprise a plurality of digits;
- the random choice by the remote server SERV of some positions ps of the digits dg of the second part p2 to be verified by the user and the random choice of some positions ps of the digits dg of the first part p1 to be sent to the remote server SERV;
- the random choice is performed according to a pitch Ts of an event-based one-time password;
- the predetermined choice of some positions for the part p2;
- the whole OTP1 is sent back by means of the remote server SERV to the electronic device D to be displayed for user verification.

**In step 1),** the remote server SERV randomly selects some given positions ps of the digits dg of said first part p1 and of said second part p2.
In the given example, it randomly selects the positions BCDF for part p1 and the position AE for the part p2. The positions GH are permanently defined positions for part p2.

**In step 2),** the remote server SERV sends a request Rq to said electronic device D for said first part p1 of said one-time password OTP1 comprising the digits dg at the selected given positions ps.
In a non-limitative embodiment, the request Rq corresponds to an input text box Msg (illustrated in Fig. 1) displayed on the website WB for the user to enter the one-time password OTP1 with masked positions ps corresponding to the positions ps of the digits dg in said second part p2 and with input positions ps corresponding to the position ps of the digits dg in said first part p1. Hence, the input text box Msg blocks out the positions in the second part p2 to disallow the user from entering any value, and prompts the user to enter the first part p1 of the OTP1.
In the given example, the masked positions are AEGH. Therefore, the user is not allowed to enter the digits dg at the positions AEGH. He is asked to enter the digits at the complementary positions BCDF.
It is to be noted that in the given non-limitative example, the permanent positions in the given example GH will always be masked.

**In step 3),** the electronic device D receives said request Rq from said remote server SERV.

After the user enters the digits in the positions BCDF, the verification of the one-time password OTP1 by the remote server SERV is performed as described before. The steps 1 to 4 above-described are performed as steps 4 to 7.

Then, **in step 8),** if said first part p1 of said one-time password OTP1 is validated, said remote server SERV transmits to said electronic device D said first part p1 and said second part p2 of the one-time password OTP1.
In the given example, the digits are validated. They are the same as in the reference one-time password OTPr. The remote server SERV sends back the whole digits "28965431" at the right positions ABCDEFGH of the one-time password OTP1.

**In step 9),** said electronic device D receives said first part p1 and said second part p2 of the one-time password OTP1 from said remote server SERV.
In the given example, said electronic device D receives the whole one-time password OTP1 "28965431", from which, the masked positions AEGH are returned in particular for the remote server SERV authentication by the user.

**In step 10),** said electronic device D displays said first part p1 and said second part p2 of said one-time password OTP1 on a screen Sc.

In the given example, said electronic device D displays said digits "28965431" for user verification.
In another non-limitative example, for user friendliness, said electronic device D displays the digits (of said second part p2) to be verified spaced from the display of the digits of the first part p1.

The user may now compare the one-time password received from the remote server SERV with the one generated.

Hence, this system permits to authenticate the remote server's identity by getting the remote server to generate the partial OTP. The remote server SERV and the electronic device D shared a same secret which is a cryptographic key known as "token seed". This shared secret is used (together with the event-based OTP) to derive the one-time password OTP1. As this shared secret is only known by the server (and the electronic device), although a malicious website may masquerade as a genuine one, it will not be able to generate a correct OTP part to be verified by the user.

It is to be understood that the present invention is not limited to the aforementioned application.
Hence, in a non-limitative embodiment, two one-time passwords OTP1 and OTP2 may be generated, each one respectively by the electronic device D and by the remote server SERV, and the same OTP verification mechanism may be performed on both sides.
Hence, for this non-limitative embodiment,
- said remote server SERV is further adapted to:
   - generate a one-time password OTP2 comprising a first part p1 and a second part p2, said first part p1 and second part p2 comprising at least one digit dg at a given position ps in said one-time password OTP2;
   - transmit said first part p1 of said one-time password OTP2 to said electronic device D;
   - receive at least said second part p2 of the one-time password OTP2 from said electronic device D;
   - display at least said second part p2 of said one-time password OTP2 on a screen Sc;
- said electronic device D is further adapted to:
   - receive from said remote server SERV said first part p1 of said one-time password OTP2;
   - verify said first part p1 of said one-time password OTP2;
   - if said first part p1 of said one-time password OTP2 is validated, transmit to said remote server SERV at least said second part p2 of the one-time password OTP2.

Hence, instead of a payment application, the invention may apply to any other secure application which needs an OTP to be authenticated, for example a biometric application, or any other kind of secure application which need an authentication, such as an authentication with a firm id card to enter in the building of a firm.
Hence, instead of an electronic device D which is an OTP generator, the electronic device may be a dynamic CVV ("Card Verification Value").
Hence, instead of a banking card, the user's card may be an eID card such as a passport card, a healthcare card, a driving license card.

Therefore the invention presents the further following advantages.
- it gives a simple way to perform mutual authentication between an electronic device and a remote server with a one-time password digits: a mutual authentication is performed by means of the OTP verification;
- it avoids a complex mechanism of signed certificate. There is no need to manage certificate revocation which is necessary when using a signed certificate;
- it permits to have a faster way of authentication (than the authentication using a signed certificate) as the authentication is performed during the one-time password transmission;
- it doesn't need a third party contribution;
- no important modifications are needed in the remote server, website and electronic device to implement these OTP verification;
- it permits to detect fraud websites;
- this OTP verification may be applied on existing OTP devices.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. System (SYS) for verifying a one-time password (OTP1) between an electronic device (D) and a remote server (SERV), **wherein** said system (SYS) comprises:
- said electronic device (D) which is adapted to:
- generate a one-time password (OTP1) comprising a first part (p1) and a second part (p2), said first part (p1) and second part (p2) comprising at least one digit (dg) at a given position (ps) in said one-time password (OTP1);
- transmit said first part (p1) of said one-time password (OTP1) to said remote server (SERV);
- receive at least said second part (p2) of the one-time password (OTP1) from said remote server (SERV);
- display at least said second part (p2) of said one-time password (OTP1) on a screen (Sc);
- said remote server (SERV) which is adapted to:
- receive from said electronic device (D) said first part (p1) of said one-time password (OTP1);
- verify said first part (p1) of said one-time password (OTP1);
- if said first part (p1) is validated, transmit to said electronic device (D) at least said second part (p2) of the one-time password (OTP1).

2. Electronic device (D) adapted to communicate with a remote server (SERV), **wherein** said electronic device (D) is adapted to:
- generate a one-time password (OTP1) comprising said first part (p1) and a second part (p2), said first part (p1) and second part (p2) comprising at least one digit (dg) at a given position (ps) in said one-time password (OTP1);
- transmit said first part (p1) of said one-time password (OTP1) to said remote server (SERV);
- receive at least said second part (p2) of the one-time password (OTP1) from said remote server (SERV);
- display at least said second part (p2) of said one-time password (OTP1) on a screen (Sc).

3. Remote server (SERV) adapted to communicate with an electronic device (D), **wherein** said remote server (SERV) is adapted to:
- receive from said electronic device (D) a first part (p1) of a one-time password (OTP1) comprising said first part (p1) and a second part (p2), said first part (p1) and second part (p2) comprising at least one digit (dg) at a given position (ps) in said one-time password (OTP1);
- verify said first part (p1) of said one-time password (OTP1);
- if said first part (p1) is validated, transmit to said electronic device (D) at least said second part (p2) of the one-time password (OTP1).

4. System (SYS), or electronic device (D), or remote server (SERV), according to one of the previous claims 1 to 3, **wherein:**
- said remote server (SERV) is further adapted to:
- transmit to said electronic device (D) said first part (p1) of said one-time password (OTP1) if said first part (p1) is validated;
- said electronic device (D) is further adapted to:
- receive said first part (p1) of the one-time password (OTP1) from said remote server (SERV);
- display said first part (p1) of said one-time password (OTP1) on said screen (Sc).

5. System (SYS), or electronic device (D), or remote server (SERV), according to one of the previous claims 1 to 4, **wherein:**
- said remote server (SERV) is further adapted to:
- select the given position (ps) of the at least one digit (dg) of said first part (p1) and of said second part (p2);
- to send a request (Rq) to said electronic device (D) for a first part (p1) of said one-time password (OTP1) comprising the at least one digit (dg) at the selected given position (ps);
- said electronic device (D) is further adapted to receive said request (Rq) from said remote server (SERV).

6. System (SYS), or electronic device (D), or remote server (SERV), according to the previous claim 5, **wherein** said remote server (SERV) is further adapted to select the given positions (ps) of a plurality of digits (dg) of said first part (p1) and of said second part (p2).

7. System (SYS), or electronic device (D), or remote server (SERV), according to the previous claim 5 or claim 6, **wherein** the selection of the at least one position (ps) of one digit (dg) of said first part (p1) and of said second part (p2) is predetermined.

8. System (SYS), or electronic device (D), or remote server (SERV), according to one of the previous claim 5 to 7, **wherein** the selection of the at least one position (ps) of one digit (dg) of said first part (p1) and of said second part (p2) is random.

9. System (SYS), or electronic device (D), or remote server (SERV), according to claim 8, **wherein** said random selection is performed at a same interval as a pitch (Ts) of an event-based one-time password (OTP1).

10. System (SYS), or electronic device (D), or remote server (SERV), according to one of the previous claims 1 to 9, **wherein** the request (Rq) corresponds to an input text box (Msg) displayed to enter the one-time password (OTP1) with masked positions (ps) corresponding to the positions (ps) of the digits (dg) in said second part (p2).

11. System (SYS), or electronic device (D), or remote server (SERV), according to one of the previous claims 1 to 10, **wherein:**
- said remote server (SERV) is further adapted to:
- generate a one-time password (OTP2) comprising a first part (p1) and a second part (p2), said first part (p1) and second part (p2) comprising at least one digit (dg) at a given position (ps) in said one-time password (OTP2);
- transmit said first part (p1) of said one-time password (OTP2) to said electronic device (D);
- receive at least said second part (p2) of the one-time password (OTP2) from said electronic device (D);
- display at least said second part (p2) of said one-time password (OTP2) on a screen (Sc);
- said electronic device (D) is further adapted to:
- receive from said remote server (SERV) said first part (p1) of said one-time password (OTP2);
- verify said first part (p1) of said one-time password (OTP2);
- if said first part (p1) is validated, transmit to said remote server (SERV) at least said second part (p2) of the one-time password (OTP2).

12. Method (MTH) for verifying a one-time password (OTP1) between an electronic device (D) and a remote server (SERV), **wherein** said method (MTH) comprises:
- generating by means of said electronic device (D) a one-time password (OTP1) comprising a first part (p1) and a second part (p2), said first part (p1) and second part (p2) comprising at least one digit (dg) at a given position (ps) in said one-time password (OTP1);
- transmitting by means of said electronic device (D) said first part (p1) of said one-time password (OTP1) to said remote server (SERV);
- receiving by means of said remote server (SERV) from said electronic device (D) said first part (p1) of said one-time password (OTP1);
- verifying by means of said remote server (SERV) said first part (p1) of said one-time password (OTP1);
- if said first part (p1) is validated, transmitting by means of said remote server (SERV) to said electronic device (D) at least said second part (p2) of the one-time password (OTP1);
- receiving by means of said electronic device (D) at least said second part (p2) of the one-time password (OTP1) from said remote server (SERV);
- displaying by means of said electronic device (D) at least said second part (p2) of said one-time password (OTP1) on a screen (Sc).
